# EUROPÄISCHE PATENTSCHRIFT

(11) **EP 1 158 480 B1**
(45) Veröffentlichungstag und Bekanntmachung des Hinweises auf die Patenterteilung: **19.11.2008**
(21) Anmeldenummer: 99973671.3
(22) Anmeldetag: 22.09.1999
(51) Int. Cl.: G09F 25/00, G09F 27/00, G06F 17/30

(54) **Informationssystem für das zur Verfügung stellen von angeforderter und Werbeinformation**
Information system providing requested and advertising information
SYSTEME D'INFORMATION

(30) Priorität: 03.02.1999 RU 99102076
(43) Veröffentlichungstag der Anmeldung: 28.11.2001
(60) Teilanmeldung: 08165104.4
(73) Patentinhaber: Moiseev, Boris Viktorovich, Moscow, 115407 (RU)
(72) Erfinder: MOISEEV, Boris Viktorovich, Moscow, 115407 (RU); BUNAKOV, Andrei Vadimovich, Moscow, 111558 (RU); IVANOV, Vladimir Vladimirovich, Moscow, 129081 (RU)
(74) Vertreter: Einsel, Martin
(86) Internationale Anmeldenummer: PCT/RU1999/000348
(87) Internationale Veröffentlichungsnummer: WO 2000/046780

(56) Entgegenhaltungen:
- EP-A1- 0 451 756
- EP-A2- 0 337 539
- DE-A1- 3 842 719
- GB-A- 2 227 585
- RU-C1- 2 102 789
- US-A- 5 339 239

## Beschreibung

Die Erfindung bezieht sich auf das Gebiet von Informationssystemen, Nachrichten- und Informationseinrichtungen und/oder Systemen, die dem Kunden Informationen auf eine Anfrage mit der Möglichkeit bereitstellen, einen Satz von Reklameinformation heranzuziehen.

Vorbekannt ist ein System der Bereitstellung der Reklameinformation, enthaltend einen im Geschäft angeordneten Ultraschallsender, der auf die Zone gerichtet ist, in welcher sich ein potentieller Kunde befinden kann. Ein jedes beliebige, sich in der Zone des Wirkungsbereiches des Empfängers bewegende Objekt, das die Ultraschallwellen vom Sender zurückstrahlt, ruft eine Änderung des Zustandes vom Ultraschallempfänger hervor. Der mit dem erwähnten Empfänger verbundene Bildschirm trennt das Signal der Zustandsänderung vom Empfänger vermittels eines Komparators ab, schaltet einen Videorekorder zur Wiedergabe auf dem Fernsehbildschirm oder Display eines Videobandes mit Reklame ein (GB 2 146 821 A). Vorbekannt sind auch ähnliche audiovisuelle Systeme, die das Sichtbarwerden eines potentiellen Reklamebenutzers registrieren sowie audiovisuelle Einrichtungen mit der Reklameinformation einschalten (EP 0 421 941 A, GB 2 270 585 A).

Aus der US-PS 5,339,239 ist ein System bekannt, das Informationen sammelt und/oder entsprechende Dienste zur Verfügung stellt. Ein Benutzer kann mittels dieses Informationssystems Informationen aus einer zentralen Datenbank unter Verwendung eines tragbaren Terminals und eines Zugangsterminals abfragen.

Die EP 0 337 539 A3 beschreibt ein telematisches System, mit dem Informations- und Werbemitteilungen zur Verfügung gestellt werden könnnen.

Aus der EP 0 451 756 A1 ist ein Informationssystem bekannt, das für die Benutzer eines Omnibussystems gedacht ist.

Die DE 38 42 719 A1 beschreibt ein Informationssystem für ortsfrernde Reisende oder Besucher, das an Bahnhöfen, Flughäfen oder auf Messen Besuchern mehr bieten kann, als herkömmliche Informationstafeln. Textliche und bildliche Informationen werden mit einem Leuchtenfeld oder einem Bild- und Tonwiedergabegerät zur Verfügung gestellt.

Die GB 2 227 585 A beschreibt ein Verfahren und ein System für die Verteilung von Informationen. Das Informationssystem benutzt einen Computer mit einer Datenbank und einer Vielzahl von Terminals, die an einen Terminalhandhabungsanschluss angeschlossen sind.

Aus der RU 2 102 789 C1 ist eine Informationsauskunftsvorrichtung bekannt.

Zur Zeit wird Reklame auch in den Telekommunikationsnetzen vorgeführt, z. B. im Internet.

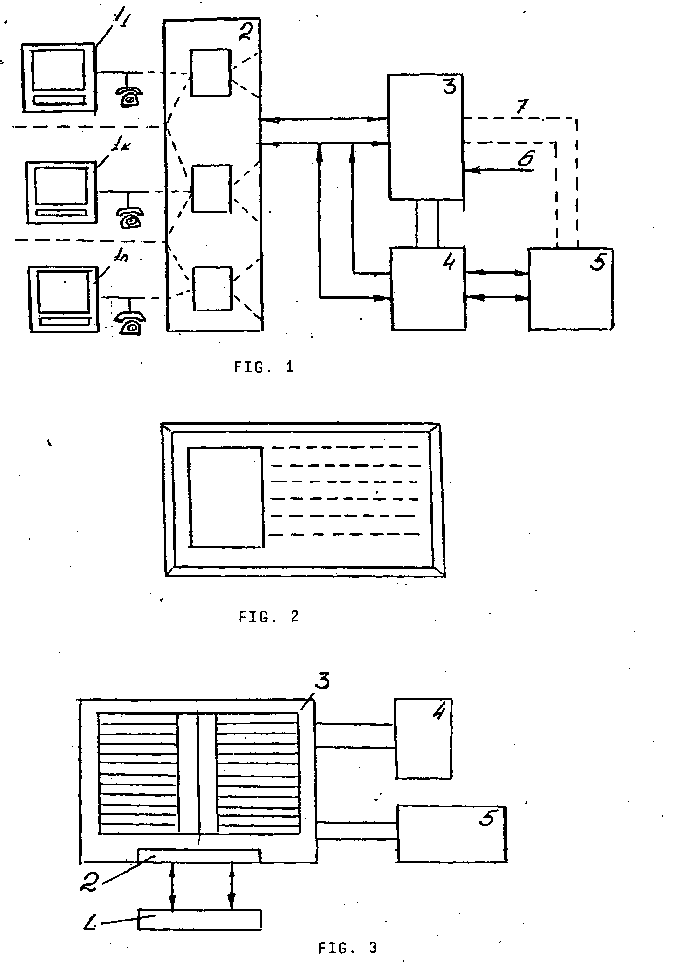

Vorbekannt ist auch das System der Bereitstellung der Reklameinformation im Internet (Honicatt Jerry, Internet, zweite Auflage, Kiew-Moskwa, Dialektik, S. 20-24, Abb.1.1), Hier wird die WEB-Seite USA Today angeführt, welche alle notwendigen Neuigkeiten enthält, die im Laufe des Tages erneuert werden; und es wird erläutert, dass Microsoft Corp. einer der mehreren Sponsoren ist, der Yahoo unterstützt (vgl. ebenda, Abb. 1.2). Aber in der erwähnten Informationsquelle sind keine technischen Mittel zur Realisierung dieser Art der Reklame angeführt.

Nach dem technischen Wesen kommt dem erfindungsgemäßen System das Informationssystem am nächsten, das zur Übertragung sowohl der vom Benutzer anzufragenden Information, als auch der Reklameinformation bestimmt ist, das wenigstens ein Mittel fuer den Benutzer aufweist, das vermittels der Verbindungseinheit mit dem Speicher zur Informationsaufbewahrung verbunden ist (vgl. EP 0337539 A2, G 09 F 27/00, 18.10.89), der erwaehnte Speicher (ZU) speichert auch die Reklameinformation.

Das vorbekannte System ist zur Uebertragung der fuer den Benutzer interessanten Information bestimmt, die im Speicher zusammen mit der Reklamenachricht gespeichert ist.

Das System verfuegt ueber eine Mehrheit der Stellen zur Bereitstellung der visuellen Information, und das fuer den Benutzer bestimmte Mittel ist in Form eines Tefefons ausgebildet sowie mit dem Mittel zur Wiedergabe der Information in Form eines Bildschirms usw. verbunden. Vom Benutzer wird die ihn interessierende Information per Telefon angefordert, der Computer umwandelt die Anfrage des Benutzers ins Suchsignal zum Suchen der noetigen Information, welche aus dem Speicher auf den Bildschirm uebertragen wird. Die Stellen zur Bereitstellung der Information (distributors) koennen ebenso mit dem Kommunikationsnetz in.Verbindung stehen, zur Zunahme der Benutzerzahl und zum Zwecke einer regelmaessigen Erneuerung der Daten mit Hilfe von Computermitteln.

Nachteilig bei diesem System ist das, dass die erwaehnten Stellen zur Bereitstellung der Information in den im votaus fuer diese Ziele zugewiesenen Orten angeordnet sind, waehrend es bequem waere, wenn das fuer den Benutzer bestimmte Mittel sich, beispielsweise, zu Hause, im Buero u.a.m. befindet.

In dem vorbekannten Informationssystem wird die Information und Reklamenachricht aus dem erwaehnten Speicher nur in einem Modus zur Bereitstellung der Information uebertragen, waehrend es manchmal notwendig ist, den Modus zur Bereitstellung sowohl der angefragten Information als auch der Reklamenachricht zu aendern, d.h., beispielsweise, es muss ein Teil der Infomationsnachricht, danach ein Teil der Reklamenachricht oder die vollkommene Reklame uebertragen werden oder zu gleicher Zeit muss sowohl die Information als auch die Reklame dargestellt werden. Darueber hinaus ist im System keine Auswahl der Reklameart vorgesehen, zum Beispiel, im Hinblick auf die den Benutzer interessierende Anfrage, d.h. in den vorbekannten Systemen ist das Aufzwingen der Reklame festzustellen.

### ERFINDUNGSTATBESTAND

Das technische Ergebnis der Erfindung besteht in der Erweiterung von Funktionsmoeglichkeiten des Systems sowie in der Zunahme der verwendeten technischen Mittel bei der Bereitstellung sowohl der angefragten als auch der Reklameinformation. Durch das anmeldungsgemaesse System wird die Verwendung der fuer diese Zwecke angegebenen Mittel ueberall, wo es passt, und nicht nur an den speziell dafuer zugewiesenen Stellen, d.h. zu Hause, im Buero, unterwegs, unter Ausnutzung von verschiedenen Kommunikationsnetzen sichergestellt.

Das System besitzt die Moeglichkeit, die Information in jeder beliebigen, fuers System geeigneten Betriebsweise zur Verfuegung zu stellen oder die Art der Reklameinformation zu waehlen, die fuer den Kunden von Interesse ist. Das System kann einen Teil der Information und/oder einen Teil der Reklame in unterschiedlicher Reihenfolge bereitstellen, kann zu gleicher Zeit sowohl Information als auch Reklame zur Verfuegung stellen, was auch fuer den Kunden bequem ist, kann die Information sowohl visuell als auch als Audioinformation sowie gedruckt bereitstellen. Als System kann sowohl ein Telekommunikationsnetz, Internetnetz, d.h. globale Kommunikationsnetze, als auch einfache informierende Auskunftsschautafeln verwendet werden, welche in den oeffentlichen Stellen angeordnet werden. Die Einfuehrung in den Informationsblock der Reklameinformation wird es auch erlauben, ebenso zusaetzliche Finanzmittel zur Entwicklung der Informations-Suchsysteme zu bekommen sowie die Qualitaet der vom Netz zur Verfuegung gestellten Information zu verbessern.

Ein technisches Ergebnis wird dadurch erreicht, dass in das System, das wenigstens ein fuer den Benutzer bestimmtes Mittel enthaelt, das ueber eine Verbindungseinheit mit dem Speicher zur Informationsaufbewahrung verbunden ist, ein Mittel zur Erzeugung eines Blocks der angefragten Information und der Reklameinformation eingefuehrt ist, das mit dem Speicher zur Informationsaufbewahrung und der Verbindungseinheit in Verbindung steht sowie einen Eingang zur Eingabe der Reklameinformation aufweist.

Darueber hinaus kann ins System ein Speicher fuer Reklameinformation eingefuehrt werden, die mit dem angegebenen Eingang des erwaehnten Mittels in Verbindung steht, das zur Formierung bestimmt ist und auf einem Mikroprozes sor angeordnet sein kann.
Das erwaehnte Mittel zur Formierung kann mit der Moeglichkeit der Aenderung der Reihenfolge der Bereitstellung der angefragten Information und/oder der Reklameinformation ausgebildet sein.

Das erwaehnte Mittel zur Formierung kann ebenso mit der Moeglichkeit der Bereitstellung der Videoabbildung der angefragten Information und/oder der Reklameinformation ausgebildet sein.

Das erwaehnte Mittel zur Formierung kann ebenso mit der Moeglichkeit der gleizeitigen visuellen Darstellung der angefragten Information und der Reklameinformation ausgebildet sein.

Das erwaehnte Mittel zur Formierung kann ebenso mit der Moeglichkeit der Bereitstellung der visuellen angefragten Information sowie der Audio-Reklameinformation ausgebildet sein.

Das erwaehnte Mittel zur Formierung kann, darueber hinaus, mit der Moeglichkeit des Drucks der angefragten Information ausgebildet sein.

Das fuer den Benutzer bestimmte Mittel kann in Form entweder eines Personalcomputers oder eines Telefons oder Videotelefons oder Funktelefons ausgebildet sein.

Darueber hinaus ist die Moeglichkeit der Ausbildung des Benutzersmittels in Form eines Steuerpultes vorgesehen. Dabei ist das Mittel zur Formierung des Blocks der angefragten Information und Reklameinformation in Form einer informierenden Schautafel ausgebildet.

Die Verbindungseinheit kann in Form entweder eines Multiplexers oder Kommunikationsnetzes oder Telekommunikationsnetzes ausgebildet sein.

Dabei kann das Kommunikationsnetz Fernsprechnetz bzw. Globales Netz sein.

Das Telekommunikationsnetz kann Internet darstellen.

Das Mittel zur Formierung des Blocks von anzufragenden Informationen sowie Reklameinformation kann mit der Moeglichkeit der Auswahl vom Typ der Reklameinformation ausgebildet sein.

Der Speicher zur Informationsaufbewahrung kann als Server ausgebildet sein, wenn als Verbindungseinheit solche Netze verwendet werden, wie Telekommunikationsnetze, globale Netze, Internet.

### KURZGEFASSTE FIGURENLISTE

In Fig.1 ist das Beipiel eines Funktionsschaltbildes vom System angefuehrt, in Fig.2 ist die Anordnung auf dem Bildschirm vom Display des Benetzermittels der angefragten Information und Reklame zu gleicher Zeit gezeigt, in Fig.3 ist das Beispiel der Verwirklichung des Systems in Form einer informierenden Schautafel (Auskunft) dargestellt.

### BEVORZUGTE AUSBILDUNGSVARIANTE VOM SYSTEM

Das anmeldungsgemaesse System enthaelt Mittel 1 fuer den Benutzer, die, beispielsweise, in Form eines Personalcomputers ausgebildet sind. Es kann eine Anzahl von den erwaehnten Mitteln sein, d.h. zum Beispiel im Falle, wenn der Personalcomputer einen Zugang zum Kommunikationsnetz hat: Fernsprechleitung, Telekommunikationsnetz des Typs Internet u.a.m. Das Mittel 1 fuer den Benutzer kann ein Telefon oder Videotelefon bzw einen Fernsteuerungspult darstellen. Die Mittel 1 fuer den Benutzer sind fuer die Formierung der Anfrage im Hinblick auf die den Benutzer interessierenden Informationen bestimmt und koennen mit der Moeglichkeit der Informationsabbildung ausgebildet werden, beispielsweise, auf dem Bildschirm vom Display des Personalcomputers vom Benutzer u.a.m. Die angegebenen Mittel 1 des Benutzers sind mit der Verbindungseinheit 2 verbunden. Die Verbindungseinheit 2 kann, wie oben angegeben, in Form vom Kommunikationsnetz, Fernsprechnetz, globalen Netz u.a.m. ausgebildet sein. Diese Einheit kann im Falle, wenn das System ein informierendes Tableau ist, einen einfachen Multiplexer (Kommunikationseinheit) darstellen, der nach Befehlssignalen, die vom Pult des Benutzermittels 1 eingegeben werden, die Information auf das Tableau des Mittels 3 fuer die Formierung des angefragten Informationsblocks und Reklameinformation bringt.

Die Verbindungseinheit 2 ist zur Verbindung vermittels der bekannten Mittel bzw. der Kommunikationsleitungen vom Benutzer und des Speichers 4 zur Informationsaufbewahrung bestimmt, welche die angefragte Information aufbewahrt, aber auch die Moeglichkeit hat, die Informationen verschiedener Art zu speichern, die beispielsweise mit verschiedener Zweckbesimmung der Datenbasis zusammenhaengt.

Dabei stellt der Speicher 4 im Falle der Verwirklichung des anmeldungsgemaessen Systems auf Basis der Telekommunikationsnetze einen Server, wo die Information gespeichert wird, die auf Anfrage dem Benutzer zur Verfuegung gestellt wird.

Aber zum Unterschied von den vorbekannten Netzen, wo der Server auf Anfrage die interessierende Information dem Benutzer ohne Umwandlung uebergibt, d.h. so, wie diese auf dem Server gespeichert ist, wird im vorliegenden System das Mittel 3 zur Blockformierung der angefragten Information sowie der Reklameinformation verwendet, vorlaeufig, bis die angefragte Information dem Benutzer zur Verfuegung gestellt wird.

Der Speicher 5 steht mit dem Eingang 6 zur Eingabe der Reklameinformation des erwaehnten Mittels 3 zur Formierung des Informationsblocks in Verbindung, das auf dem Mikroprozessor ausgebildet sein kann, auf dessen Speicherdatenleitung (Eingang 7) die angefragte Information vom Server (Speicher 4) uebergeben wird, dem anderen Eingang 6 der Speicherdatenleitung wird die Reklameinformation zugefuehrt. Die Reklameinformation kann hierbei von der Tastatur unter Ausnutzung des Eingabeblocks (in der Zeichnung nicht gezeigt) eingegeben werden, man kann sie auch mit Hilfe des Speichers fuer Reklameinformation eingegeben werden. Dabei koennen vermittels der Programmittel des Mikroprozessors verschiedene Eingabeweisen sowohl der angefragten als auch der Reklameinformation vorgesehen werden.

Das Mikroprozessormittel 3, zum Beispiel, - Mikrokontroller --ist zur Formierung des Informationsblocks zur Vereinigung der vom Benutzer angefragten Information aus dem Speicher 4 mit der Reklameinformation bestimmt, die aus dem Speicher 5 oder unmittelbar von der Tastatur ankommt, sowie zur Formierung der Uebertragungsweise dieser oder jener Information entsprechend den Prozeduren, die von diesem Mittel vorgesehen sind. Diese Prozeduren koennen, beispielsweise, die folgenden sein.

Das erste Element des Informationsblocks ist Reklame, dann die angefragte Information.

Das erste Element des Informationsblocks ist das Verzeichnis der moeglichen Reklametype oder die Liste der verschiedenen Gebieten der Technik oder der Kenntnisse, fuer welche die Reklameinformation u.a.m. vorhanden ist.

Die Prozedur kann zu gleicher Zeit die Bereitstellung der anfragten Information bzw. der Reklame u.a.m. ausfuehren.

Nach der Vereinigung entsprechend der vorgegebenen Prozedur der angefragten und der Reklameinformation wird dieser Block vermittels der Verbindungseinheit 2 (durch das Netz) seinem Benutzer uebergeben.

Im Falle, dass es fuer Benutzer moeglich ist, die ihn interessierende Reklame auszuwaehlen, so kann das System im Dialogbetrieb funktionieren: der Benutzer erzeugt die Anfrage auf Information; die Information wird im Speicher 4 gesucht; ueber das Mittel 3 wird die Nachricht davon uebergeben, dass eine solche Information existiert, und das Verzeichnis der Reklamedienstleistungen wird uebergeben; der Benutzer waehlt die sie interessierende Reklamedienstleistung aus, sendet ins Netz seine Antwort und erhaelt den Block von der angefragten Information und den vom Benutzer gewaehlten Typ der Reklameinformation im entsprechenden Betrieb der Bereitstellung derselben.

Das anmeldungsgemaesse System kann ebenso in Form eines Informations-Auskunftstableaus, zum Beispiel, in Form eines Bildschirmes des Monitors oder einfach eines Tableaus durchgefuehrt werden. In diesem Fall formiert der Benutzer mit Hilfe eines Taststeuerpultes (Mittel 1) eine Anfrage der fuer ihn interessanten Information, der Umsetzer(in der Zeichnung nicht angezeigt) [umsetzt] den vom Steuerpult eingegebenen Befehl in ein Signal [ ], das dem Suchobjekt entspricht, die Verbindungseinheit 2 (z.B. Multiplexer) schliesst den notwendigen Speicherplatz des Speichers 4 an, auf welchem die angefragte Information gespeichert ist, gleichzeitig oder bevor auf dem Tableau des Mittels 3 die angefragte Information wiederzugeben ist, wird dort die Reklame wiedergegeben.

### GEWERBLICHE ANWENDBARKEIT

Das erfindungsgemaesse Informationssystem kann in einem weiten Spektrum von Informations-und Information-Auskunftssystemen seine Verwendung finden, denn es fuehrt die Bereitstellung einer beliebigen, den Benutzer interessierenden Information durch sowie versieht diese mit Reklameinformation unterschiedlicher Art; hierbei besitzt das System eine Moeglichkeit, die Ordnung der Informationsbereitstellung zu aendern. Das gegebene System kann mit Hilfe von vorbekannten lokalen, globalen Netzen sowie den Kommunikationsnetzen realisiert werden.

### Bezugszeichenliste

- 1: Mittel zur Formierung der Anfrage für den Benutzer (PC, Telefon)
- 2: Verbindungseinheit (Femsprechnetz, globales Netz)
- 3: Mittel für die Formierung des Blocks aus Information und Reklame-information (Mikrocontroller)
- 4: Speicher zur Aufbewahrung von Informationen
- 5: Speicher der Reklameinformation
- 6: Eingang zur Eingabe der Reklameinformation in das Mittel 3
- 7: Eingang der Speicherdatenleitung

## Patentansprüche

1. Informationssystem, enthaltend
wenigstens ein Mittel (1) für Benutzer, das über eine Verbindungseinheit (2) mit einem Speicher (4) zur Aufbewahrung von Information verbunden ist,
bei dem das System ein Mittel (3) zur Formierung eines Blocks aus einer angefragten Information und einer Reklameinformation aufweist,
welches Mittel (3) mit dem Speicher (4) zur Aufbewahrung der Information und der Verbindungseinheit (2) in Verbindung steht sowie einen Eingang (6) zur Eingabe der Reklameinformation aufweist,
bei dem das System einen Speicher (5) zur Speicherung von Reklameinformationen aufweist, der mit dem erwähnten Eingang (6) des angegebenen Mittels (3) zur Formierung eines Blocks aus der angefragten Information und der Reklameinformation in Verbindung steht, und
bei dem das erwähnte Mittel (3) zur Formierung eines Blocks aus der Information und der Reklameinformation mit der Möglichkeit der Änderung der Reihenfolge der Bereitstellung von angefragten Informationen und/oder Reklameinformationen ausgestattet ist.

2. System nach Anspruch 1,
**dadurch gekennzeichnet,**
**dass** das erwähnte Mittel (3) zur Formierung eines Blocks aus der angefragten Information und aus Reklameinformation auf einem Mikroprozessor ausgeführt ist

3. System nach Anspruch 1 oder 2,
**dadurch gekennzeichnet,**
**dass** das Mittel (3) zur Formierung eines Blockes aus der angefragten Information und aus Reklameinformation mit der Möglichkeit der Bereitstellung einer Videoabbildung von angefragten Informationen und/oder Reklameinformationen ausgebildet ist.

4. System nach Anspruch 3.
**dadurch gekennzeichnet,**
**dass** das angegebene Mittel(3) zur Formierung mit der Möglichkeit einer gleichzeitigen Visualisierung der angefragten Informationen sowie Reklameinformationen ausgebildet ist.

5. System nach einem der vorstehenden Ansprüche,
**dadurch gekennzeichnet,**
**dass** das angegebene Mittel (3) zur Formierung mit der Möglichkeit der Bereitstellung der visuellen angefragten Informationen sowie Audioreklameinformationen ausgebildet ist.

6. System nach einem der vorstehenden Ansprüche,
**dadurch gekennzeichnet,**
**dass** das angegebene Mittel (3) zur Formierung mit der Möglichkeit vom Drucken der angefragten Informationen ausgebildet ist.

7. System nach einem der vorstehenden Ansprüche,
**dadurch gekennzeichnet,**
**dass** das Benutzermittel (1) als ein Personalcomputer ausgebildet ist.

8. System nach einem der Ansprüche 1 bis 6,
**dadurch gekennzeichnet,**
**dass** das Benutzermittel (1) in Form eines Telefons oder Videotelefons oder Funktelefons ausgebildet ist.

9. System nach einem der Ansprüche 1 bis 6,
**dadurch gekennzeichnet,**
**dass** das Benutzermittel (1) als ein Steuerpult ausgebildet ist.

10. System nach Anspruch 9,
**dadurch gekennzeichnet,**
**dass** das Mittel (3) zur Formierung des Blocks von angefragten Informationen und Reklameinformationen in Form eines Informationstableaus ausgebildet ist.

11. System nach Anspruch 9 oder 10,
**dadurch gekennzeichnet,**
**dass** die Verbindungseinheit (2) als Multiplexer ausgebildet ist.

12. System nach Anspruch 9 oder 10.
**dadurch gekennzeichnet,**
**dass** die Verbindungseinheit (2) in Form eines Kommunikationsnetzes oder Telekommunikationsnetzes ausgebildet ist.

13. System nach Anspruch 12,
**dadurch gekennzeichnet,**
**dass** das Kommunikationsnetz eine Fernsprechleitung darstellt.

14. System nach Anspruch 13,
**dadurch gekennzeichnet,**
**dass** die Fernsprechleitung ein mobiles Funktelefonnetz ist.

15. System nach Anspruch 12,
**dadurch gekennzeichnet,**
**dass** das Kommunikationsnetz ein globales Netz darstellt.

16. System nach Anspruch 12,
**dadurch gekennzeichnet,**
**dass** das Kommunikationsnetz ein Intemetnetz darstellt.

17. System nach einem der vorstehenden Ansprüche,
**dadurch gekennzeichnet,**
**dass** das erwähnte Mittel (3) zur Formierung des Blocks von angefragten Informationen und Reklameinformationen mit der Möglichkeit der Auswahl vom Typ der Reklameinformationen ausgebildet ist.

18. System nach einem der vorstehenden Ansprüche,
**dadurch gekennzeichnet,**
**dass** der Speicher (4) zur Speicherung der Informationen als ein Server ausgebildet ist.

## Claims

1. An information system, including
at least one device (1) for a user connected via a connection unit (2) to a memory device (4) for storing information,
wherein said system comprises a device (3) for forming a set of requested information and of an advertising information,
said device (3) being connected with said memory device (4) for storing information and with said connection unit (2), and comprising an entry (6) for inputting the advertising information,
wherein said system comprises a memory device (5) for storing advertising information which memory device is connected with said entry (6) of said device (3) for forming a set of requested information and of the advertising information, and
wherein said device (3) for forming a set of said information and of the advertising information being provided with a possibility of change of the sequence of providing the requested information and/or the advertising information.

2. The system as claimed in claim 1, **characterized in that** said device (3) for forming the set of the requested information and of advertising information is implemented in a microprocessor.

3. The system as claimed in claim 1 or claim 2, **characterized in that** said device (3) for forming a set of requested information and of advertising information is implemented with the possibility to provide video display presentation of requested information and/or advertising information.

4. The system as claimed in claim 3, **characterized in that** said device (3) for forming is provided with the possibility for simultaneous visualization of the requested information and the advertising information.

5. The system as claimed in any of the preceding claims, **characterized in that** said device (3) for forming is provided with the possibility to provide the requested visual information and acoustic advertising information.

6. The system as claimed in any of the preceding claims, **characterized in that** said device (3) for forming is provided with the possibility to print the requested information.

7. The system as claimed in any of the preceding claims, **characterized in that** said device (1) for a user is implemented as a personal comuter.

8. The system according to any of the claims 1 to 6, **characterized in that** said device (1) for a user is implemented in the form of a telephone or a video phone or a radio phone.

9. The system according to any of the claims 1 to 6, **characterized in that** the device (1) for a user is implemented as a control panel.

10. The system according to claim 9, **characterized in that** the device (3) for forming the set of the requested information and the advertising information is provided in the form of an information display board.

11. The system as claimed in claim 9 or claim 10, **characterized in that** said connection unit (2) is implemented as a multiplexer.

12. The system according to claim 9 or claim 10, **characterized in that** the connection unit (2) is implemented in the form of a communication network or a telecommunication network.

13. The system according to claim 12, **characterized in that** said communication network is presented as telephone network.

14. The system according to claim 13, **characterized in that** said telecommunication network is a cellular telephone network.

15. The system according to claim 12, **characterized in that** said communication network is presented as wide area network.

16. The system according to claim 12, **characterized in that** said communication network is the internet.

17. The system as claimed in any of the preceding claims, **characterized in that** said device (3) for forming the set of requested information and of advertising information is provided with the possibility of a choice of the type of advertising information.

18. The system according to any of the preceding claims, **characterized in that** said memory device (4) for storing information is implemented as a server.

## Revendications

1. Système d'informations, comportant
au moins un moyen (1) pour des utilisateurs, qui est relié par une unité de liaison (2) à une mémoire (4) destinée à conserver des informations,
dans lequel le système comprend un moyen (3) destiné à former un bloc à partir d'une information demandée et d'une information publicitaire,
lequel moyen (3) est en liaison avec la mémoire (4) destinée à conserver l'information et avec l'unité de liaison (2), et comporte une entrée (6) destinée à entrer l'information publicitaire,
dans lequel le système comporte une mémoire (5) qui est destinée à stocker des informations publicitaires et est en liaison avec l'entrée (6) mentionnée du moyen (3) indiqué destiné à former un bloc à partir de l'information demandée et l'information publicitaire et
dans lequel le moyen (3) mentionné destiné à former un bloc à partir de l'information et de l'information publicitaire est pourvu de la possibilité de modifier l'ordre de mise à disposition des informations demandées et/ou des informations publicitaires.

2. Système selon la revendication 1, **caractérisé en ce que**
le moyen (3) mentionné destiné à former un bloc à partir de l'information demandée et à partir de l'information publicitaire est exécuté sur un microprocesseur.

3. Système selon la revendication 1 ou 2, **caractérisé en ce que**
le moyen (3) destiné à former un bloc à partir de l'information demandée et à partir de l'information publicitaire est pourvu de la possibilité de mettre à disposition une représentation vidéo des informations demandées et/ou des informations publicitaires.

4. Système selon la revendication 3, **caractérisé en ce que**
le moyen (3) indiqué destiné à la formation du bloc est conçu avec la possibilité de visualiser simultanément les informations demandées ainsi que les informations publicitaires.

5. Système selon l'une quelconque des revendications précédentes, **caractérisé en ce que**
le moyen (3) indiqué destiné à la formation du bloc est conçu avec la possibilité de mettre à disposition les informations demandées visuelles ainsi que des informations publicitaires audio.

6. Système selon l'une quelconque des revendications précédentes, **caractérisé en ce que**
le moyen (3) indiqué à la formation du bloc est conçu avec la possibilité d'imprimer les informations demandées.

7. Système selon l'une quelconque des revendications précédentes, **caractérisé en ce que**
le moyen d'utilisateur (1) est conçu en tant qu'ordinateur individuel.

8. Système selon une des revendications 1 à 6, **caractérisé en ce que**
le moyen d'utilisateur (1) est conçu sous la forme d'un téléphone ou d'un visiophone ou d'un téléphone mobile.

9. Système selon une des revendications 1 à 6, **caractérisé en ce que**
le moyen d'utilisateur (1) est conçu en tant que pupitre de commande.

10. Système selon la revendication 9, **caractérisé en ce que**
le moyen (3) destiné à la formation du bloc d'informations demandées et d'informations publicitaires est conçu sous la forme d'un tableau d'informations.

11. Système selon la revendication 9 ou 10, **caractérisé en ce que**
l'unité de liaison (2) est conçue en tant que multiplexeur.

12. Système selon la revendication 9 ou 10, **caractérisé en ce que**
l'unité de liaison (2) est conçue sous la forme d'un réseau de communication ou d'un réseau de télécommunication.

13. Système selon la revendication 12, **caractérisé en ce que**
le réseau de communication représente un circuit téléphonique.

14. Système selon la revendication 13, **caractérisé en ce que**
le circuit téléphonique est un réseau de téléphonie mobile.

15. Système selon la revendication 12, **caractérisé en ce que**
le réseau de communication représente un réseau mondial.

16. Système selon la revendication 12, **caractérisé en ce que**
le réseau de communication représente un réseau Internet.

17. Système selon l'une quelconque des revendications précédentes, **caractérisé en ce que**
le moyen (3) mentionné destiné à former le bloc d'informations demandées et d'informations publicitaires est conçu avec la possibilité de sélectionner le type des informations publicitaires.

18. Système selon l'une quelconque des revendications précédentes, **caractérisé en ce que**
la mémoire (4) destinée à stocker les informations est conçue en tant que serveur.
